# EUROPÄISCHE PATENTANMELDUNG

(11) **EP 1 591 048 A1**
(43) Veröffentlichungstag der Anmeldung: **02.11.2005**
(21) Anmeldenummer: 05009455.6
(22) Anmeldetag: 29.04.2005
(51) Int. Cl.: A47J 25/00

(54) **Apfelausstecher**

(30) Priorität: 29.04.2004 DE 102004021295
(71) Anmelder: LEIFHEIT AG, 56377 Nassau/Lahn (DE)
(72) Erfinder: Klant, Keesjan, 9056 Gais (AR) (CH)

(57) **Zusammenfassung**

Apfelausstecher mit einem Ausstechrohr (1), einer Auswurfhilfe und einem rückwärtigen Handgriff (5), wobei das Ausstechrohr (1) in Längsrichtung geteilt ist und wobei beide Ausstechrohrhälften (2, 3; 10, 11; 21, 22) klappbar über ein Gelenk (4, 15, 17) verbunden sind (Fig. 1).

## Beschreibung

Die Erfindung betrifft einen Apfelausstecher mit einem Ausstechrohr, einer Auswurfhilfe und einem rückwärtigem Handgriff.

Derartige Apfelausstecher, auch Apfelentkemer genannt, sind seit fast 100 Jahren bekannt. Allerdings werden sie in einem normalen Haushalt nur verhältnismäßig selten innerhalb eines Jahres benutzt, da sie für andere anfallende Schneid- oder Garnierarbeiten nicht einsetzbar sind. Dies ist wohl auch der Grund, daß sich die Apfelausstecher, wie sie zum Beispiel durch die US Patentschrift 1,051,175, die US Patentschrift 1,272,107 aus den Jahren 1912 und 1918 sowie die DE OS 3524070 aus 1985 bekannt sind, in dieser langen Zeit nicht wesentlich verändert haben. Alle drei Ausführungsformen haben ein ringförmig geschlossenes Ausstechrohr, an das sich als Auswurfhilfe für den Apfelkern ein teilweise offenes Rohrstück anschließt und die in einem Handgriff enden. Nachteilig an dieser schon als Standardausführungsform zu bezeichnenden Apfelausstechern ist nach wie vor das teilweise geschlossene Ausstechrohr, in dem sich der Apfelkern verklemmt und mühsam herausgearbeitet werden muß. Das teilweise offene Rohrstück ist bei der Arbeitsweise eher hinderlich als nützlich, da es das Herausziehen des Apfelkerns erschwert. Die Neigung zu Verkantungen ist recht groß.

Aufgabe der Erfindung ist es, einen Apfelausstecher gemäß dem Oberbegriff des Anspruchs 1 zu schaffen, der ein leichtes Einstechen in den Apfelkern ermöglicht, der mit dem ausgestochenen Apfelkern unproblematisch aus dem Apfel herauszuziehen ist und der insbesondere sehr schnell von dem Apfelkern befreit werden kann.

Dies wird in genial einfacher und überraschender Weise dadurch erreicht, daß das Ausstechrohr in seiner gesamten Länge in Längsrichtung geteilt und über ein Gelenk aufklappbar ist.

Weitere Ausgestaltungen der Erfindung sind den Unteransprüchen zu entnehmen. Dabei kann das Gelenk derart ausgebildet sein, daß dieses am Ende des zweigeteilten Ausstechrohres vorgesehen ist und nur eine Ausstechrohrhälfte abklappbar ist, das Gelenk kann als Kreuzgelenk etwa mittig angeordnet ausgeführt sein und es kann am Ende des Handgriffes angeordnet sein. Dabei bietet es sich auch an, aus Kostengründen ein Filmschamier als Gelenk zu wählen.

Zur weiteren Bedienungserleichterung ist eine Feder vorgesehen, die die beiden Ausstechrohrhälften in unbelastetem Zustand geschlossen hält. Zum Auswurf des Apfelkemes sind gegenläufige Fingergriffe in Form von Mulden beziehungsweise Erhebungen an den Griffhälften vorgesehen.

Schließlich wird ein besonders leichtes Arbeiten dadurch erreicht, daß die Ausstechrohrhälften mit einer reibungsverminderten Polymerbeschichtung versehen sind. Dazu bietet sich Silikon oder auch PTFE an.

Einige Ausführungsbeispiele der Erfindung sind im Folgenden anhand der Zeichnungen näher erläutert. Es zeigen:
- Fig. 1: eine Ansicht eines Apfelausstechers,
- Fig. 2: eine Alternativlösung und
- Fig. 3: eine weitere Altemativlösung

Das Ausstechrohr 1 eines Apfelausstechers ist in Längsrichtung in eine Ausstechrohrhälfte 2 und eine über ein Gelenk 4 abklappbare Ausstechrohrhälfte 3 geteilt. Der Handgriff 5 setzt sich dabei aus dem fest mit der Ausstechrohrhälfte 2 verbundenen starren Handgriff 6 und dem mit der abklappbaren Ausstechrohrhälfte 3 verbundenen Handgriffteil 7 zusammen.

Die beiden Ausstechrohrhälften 2 und 3 werden über eine nicht dargestellte Feder im geschlossenen Zustand gehalten und können zum Auswerfen des Apfelkernes über den an dem Handgriffteil 7 angeformten Fingergriff 8 geöffnet werden.

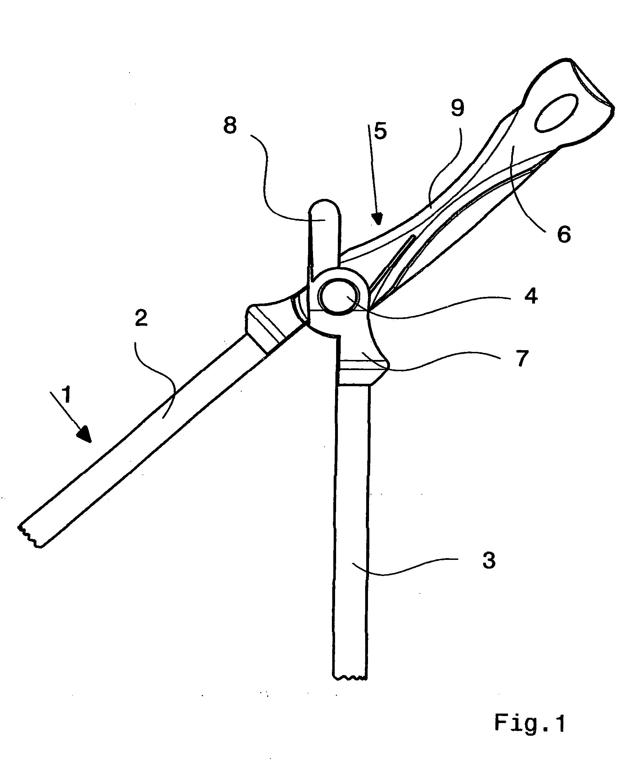

Natürlich ist es auch möglich, die nicht dargestellte Feder als Druckfeder auszubilden, so daß zum Entfernen des Apfelkerns die beiden Ausstechrohrhälften 2 und 3 durch die Wirkung der Feder in die in Fig. 1 dargestellte Stellung gelangen. Der Fingergriff 8 könnte dann als Rastelement, das in eine Hinterschnittmulde 9 im starren Handgriffteil 6 einrastet, dienen.

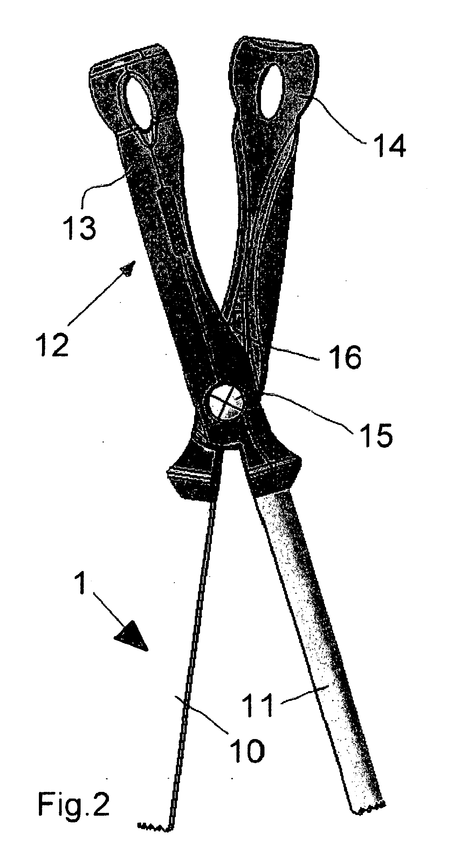

In Fig. 2 ist eine Ausführungsform eines Apfelausstechers dargestellt, bei dem sowohl das Ausstechrohr 1 in zwei symmetrische Ausstechrohrhälften 10 und 11 als auch der Handgriff 12 in zwei symmetrische Handgriffhälften 13 und 14 geteilt ist, die durch das Gelenk 15 verbunden sind. Mit 16 ist eine die beiden Handgriffhälften beaufschlagende Feder gekennzeichnet.

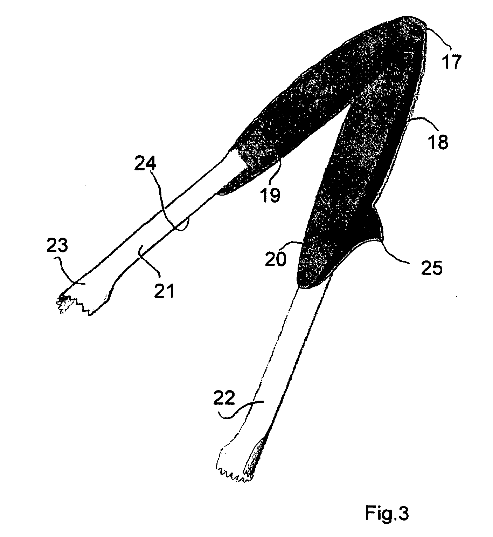

In Fig. 3 ist ein Ausführungsbeispiel eines Apfelausstechers dargestellt, bei dem das Gelenk 17 am Ende des symmetrisch ausgeführten zweigeteilten Handgriffes 18 angeordnet ist. Die Handgriffhälften 19, 20 nehmen jeweils eine Ausstechrohrhälfte 21, 22 auf. Die Ausstechrohrhälften 21 und 22 sind ebenfalls symmetrisch ausgeführt und bilden im vorderen Bereich 23 ein geschlossenes Rohr und verdünnen sich im mittleren Bereich 24.

Im Gelenk 17 ist wiederum eine Feder angeordnet, die nicht dargestellt ist und die beiden Handgriffhälften 19, 20 zusammen hält. Zum Entsorgen des Apfelkerns werden die beiden Ausstechrohrhälften 21, 22 über die an beiden Handgriffhälften 19, 20 angeordneten Fingergriffe 25 in die in Fig. 3 dargestellte Situation geöffnet.

### BEZUGSZEICHENLISTE

- 1: Ausstechrohr
- 2: Ausstechrohrhälfte
- 3: abklappbare Ausstechrohrhälfte
- 4: Gelenk
- 5: Handgriff
- 6: starren Handgriff
- 7: Handgriffteil
- 8: Fingergriff
- 9: Hinterschnittmulde
- 10: Ausstechrohrhälfte
- 11: Ausstechrohrhälfte
- 12: Handgriff
- 13: Handgriffhälfte
- 14: Handgriffhälfte
- 15: Gelenk
- 16: Feder
- 17: Gelenk
- 18: Handgriff
- 19: Handgriffhälfte
- 20: Handgriffhälfte
- 21: Ausstechrohrhälfte
- 22: Ausstechrohrhälfte
- 23: vordere Bereich
- 24: mittlere Bereich
- 25: Fingergriff

## Patentansprüche

1. Apfelausstecher mit einem Ausstechrohr (1), einer Auswurfhilfe und einem rückwärtigen Handgriff (5), **dadurch gekennzeichnet, daß** das Ausstechrohr (1) in Längsrichtung geteilt ist, und daß beide Ausstechrohrhälften (3, 4; 10, 11; 21, 22) klappbar über ein Gelenk (4, 15, 17) verbunden sind.

2. Apfelausstecher nach Anspruch 1, **dadurch gekennzeichnet, daß** der Handgriff (5, 12) in Längsrichtung geteilt ist, und daß das Gelenk (4, 15) am Ausstechrohr (1) seitigen Ende vorgesehen ist.

3. Apfelausstecher nach Anspruch 1, **dadurch gekennzeichnet, daß** der Handgriff (18) in Längsrichtung geteilt ist, und daß das Gelenk (17) am Ende des Hangriffes (18) vorgesehen ist.

4. Apfelausstecher nach Anspruch 3, **dadurch gekennzeichnet, daß** das Gelenk (17) am Ende des Handgriffes als Filmscharnier ausgebildet ist.

5. Apfelausstecher nach einem der Ansprüche 1 bis 4, **dadurch gekennzeichnet, daß** die Ausstechrohrhälften (3, 4; 10, 11; 21, 22) über eine Feder und/oder eine Rasteinrichtung in geschlossenem Zustand gehalten sind, und daß gegenläufig wirkende Fingergriffe (8, 25) vorgesehen sind.

6. Apfelausstecher nach einem der Ansprüche 1 bis 5, **dadurch gekennzeichnet, daß** die Ausstechrohrhälften (3, 4; 10, 11; 21, 22) mit einer reibungsvermindemden Polymerbeschichtung versehen sind.
